# EUROPEAN PATENT APPLICATION

(11) **EP 0 929 078 A1**
(43) Date of publication of application: **14.07.1999**
(21) Application number: 98901523.5
(22) Date of filing: 05.02.1998
(51) Int. Cl.: G21F 9/02, G21D 3/08

(54) **APPARATUS FOR TREATING AIR CONTAINING HYDROGEN GAS**

(30) Priority: 06.02.1997 JP 2396997
(71) Applicant: Mitsubishi Heavy Industries, Ltd., Tokyo 100-8315 (JP)
(72) Inventor: OGINO, Masao, Kobe Shipyard & Machinery Works, Hyogo-ku, Kobe-shi, Hyogo-ken 652-8585 (JP)
(74) Representative: Perkins, Sarah
(86) International application number: JP9800485
(87) International publication number: WO9835357

(57) **Abstract**

An apparatus for treating air containing hydrogen gas used in an area such as an interior of a nuclear reactor containment vessel where hydrogen gas is generated and apt to be accumulated so as to treat rapidly and safely the hydrogen.

A treating apparatus (30) for treating air containing hydrogen gas in a nuclear reactor containment vessel, comprises a housing (31) provided with an air intake port (33) and an exhaust port (35) and defining a gas passage therein, a catalyst bed (37) disposed in said gas passage, and a heater (39) disposed in or close to said catalyst bed. The catalyst bed is composed of plate type catalysts or honeycomb type catalysts and activated by being heated with an electric heater. Hydrogen and oxygen in the air containing hydrogen gas flowing in come into contact with the catalyst bed and recombine together such that the hydrogen gas is thus removed from the air.

## Description

### FIELD OF THE TECHNOLOGY

The present invention relates to an apparatus for treating air containing hydrogen gas, and in particular, an apparatus for safely treating the hydrogen gas contained in the air in a nuclear reactor containment vessel.

### BACKGROUND TECHNOLOGY

When hydrogen gas is contained in air, hydrogen and oxygen coexist, making it easy for the hydrogen to begin a combustion reaction. Further since hydrogen reacts explosively with oxygen when the hydrogen concentration rises above a certain value, sufficient countermeasures must be provided in certain kinds of plants handling hydrogen gas or generating hydrogen gas. For example, in a nuclear power plant, if a nuclear core is heated excessively, zirconium in the zirconium base alloy used for fuel cladding tubes of the nuclear reactor fuel, etc., and water steam react with each other to produce a large quantity of hydrogen gas. Furthermore, radiolysis of water caused by radioactive material that flows into a sump in the nuclear reactor containment vessel during an accident generates a large quantity of hydrogen gas slowly but over a long period to accumulate it in the reactor containment vessel. When the hydrogen concentration in the atmosphere within the containment vessel rises above four percent, particularly above six percent, there is a possibility that the hydrogen will burn and the hydrogen will burn explosively if the concentration goes up above ten percent. Accordingly, to insure safety, the hydrogen gas must be treated and removed when it is in lower concentrations and concentration rises to higher levels must be prevented.

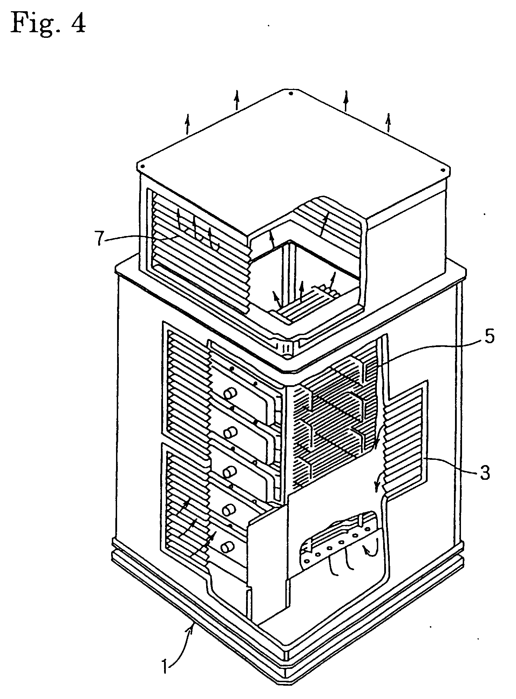

In response to the needs described above, an electric hydrogen recombining unit, an ignition type hydrogen burner, a catalytic hydrogen recombining unit and the like have been proposed, are under development or are being used. Describing them in outline, the electric hydrogen recombining unit shown in Fig. 4 mainly used where the generation of hydrogen gas is slow and the concentration of hydrogen is less than four percent, treats hydrogen by taking a gas mixture of hydrogen and air though a suction port 3 into the recombining unit and discharges an exhaust gas from an exhaust port 7 after hydrogen and oxygen is recombined with an electric heater 5.

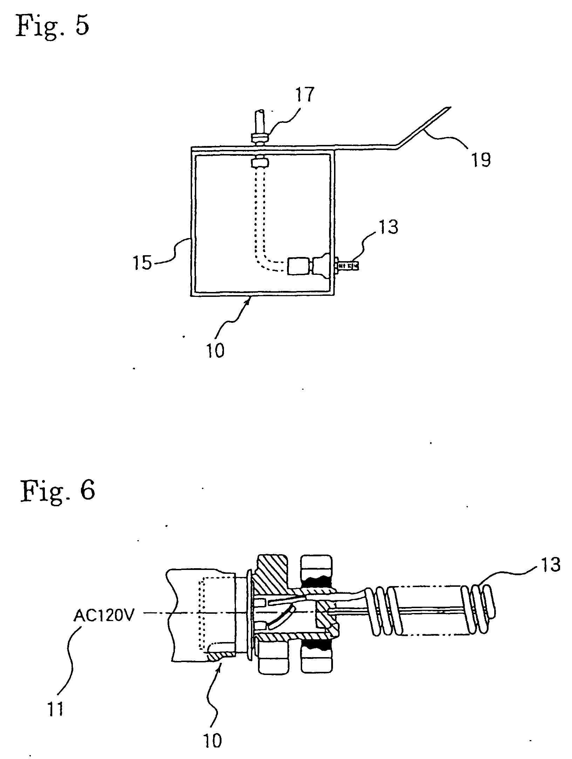

The ignition type hydrogen burner 10 shown in Figs. 5 and 6 is installed in a free space and a heater 13 is energized from an electric source 11 of about 120V to ignite a gas mixture containing hydrogen and to burn the hydrogen content by propagating a flame. In addition, the ignition type hydrogen burner 10 has a protective housing 15, a conduit for electric supply, and a protective umbrella 19 in addition to the heater 13. This protective umbrella 19 protects the heater 13 from liquid droplets sprayed from emergency cooling sprays in the containment vessel.

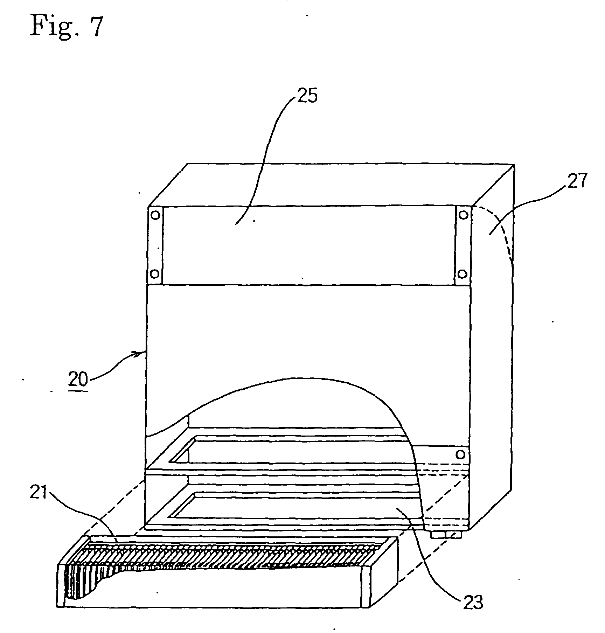

Furthermore, the catalytic hydrogen recombining unit 20 shown in Fig. 7 is composed of a removable catalyzer bed 21 consisting of a stack of plate type catalyst carrying platinum or palladium as the catalytic substance deposited thereon, an intake opening 23, an exhaust opening 25 and a protective housing 27. Then, when hydrogen gas is generated in a containment vessel where it is installed, a gas mixture containing hydrogen and oxygen flows into the catalyzer bed 21 through the intake opening 23 under natural circulation. Hydrogen and oxygen recombine on the catalytic surface in the catalyzer bed 21, the catalyzer bed 21 is heated with the heat of reaction, and the gas takes on a hot state as it passes through the catalyzer bed 21. The catalyst is activated by being heated and the reaction is further activated. Thereafter, the heated hot discharge gas is exhausted through the exhaust opening 25 to complete the treatment of the hydrogen gas.

In the electric hydrogen recombining unit described before, there are problems in that the treatment is slow because it is performed under recombining reaction without burning propagation and in that the apparatus can not be actually used for gas mixtures with a hydrogen concentration above four percent in order to protect the apparatus from the strong combustion that would occur.

Further, although the ignition type hydrogen burner can treat a large quantity of hydrogen within a free space in a short period of time because the gas mixture containing hydrogen is directly ignited and a pilot (flame) is propagated therein, there is another problem in that hydrogen can not be treated when the hydrogen concentration is below about six percent above which the flame can propagate with burning. In spite of the advantages of the burner, it can be said that the use thereof should be confined to emergency situations when a large quantity of hydrogen gas is produced, because the treatment uses flames and there is a fear that other equipment such as safety system components, electricity supply cables and nuclear instrumentation systems may be adversely influenced.

Furthermore, though the catalytic hydrogen recombining unit can treat gas mixtures to remove hydrogen in a wide range of lower to higher concentrations, the treatment speed is so slow that generated hydrogen gas can not be wholly treated when a large quantity of the gas is generated in a short period, thereby allowing the generation of higher hydrogen concentrations. An ignition in those states of higher hydrogen concentration raises another problem by causing deflagration or detonation. Besides, in an emergency situation such as a case when a large amount of hydrogen gas is generated, there is a problem that various kinds of substances are included into an atmosphere in the containment vessel and the catalyst can be poisoned by poisoning substances in the included ones so as to lower the activity of the catalyst, making the treatment of the hydrogen gas impossible.

Accordingly, an object of the present invention is to provide a treatment apparatus for an air containing hydrogen gas which can reliably and safely treat hydrogen in a gaseous mixture containing hydrogen even with any concentration of hydrogen or with various kinds of poisoning substances contained in the gaseous mixture.

### DISCLOSURE OF THE INVENTION

In order to solve the problems described above, according to the present invention, an apparatus for air containing hydrogen gas comprises a housing defining a gas passage therein with an intake port and an exhaust port, a catalyst bed disposed in the gas passage and a heater disposed in or adjacent to the catalyst bed. In an embodiment where the catalyst bed is composed of a plate type catalyzer, an electric heater maybe disposed by extending it through and laying it in contact with the catalyst bed, and in another embodiment where the catalyst is composed of a honey comb type catalyzer, it is preferred that an electric heater be disposed in the gas passage at an upstream side of and close to the honey comb type catalyzer.

### BRIEF DESCRIPTION OF THE DRAWINGS

Fig. 1 is a schematic view showing a general construction of the embodiment according to the present invention;
Fig. 2 is a sectional elevational view showing another embodiment according to the present invention;
Fig. 3 is a horizontal sectional view taken off along line III - III in Fig. 1;
Fig. 4 is a general perspective view showing an example of prior art apparatus;
Fig. 5 is a general perspective view of another prior art apparatus;
Fig. 6 is an enlarged view showing a portion in Fig. 5; and
Fig. 7 is an exploded view of another prior art apparatus.

### BEST MODE OF CARRYING OUT THE INVENTION

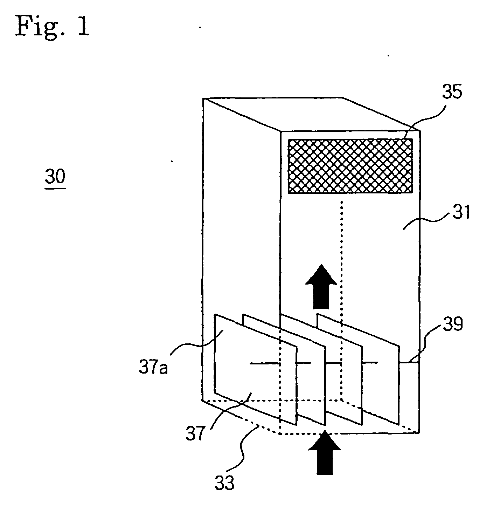

In reference to the drawings attached, an embodiment of the present invention is hereinbelow described. Referring to Fig. 1 first, a protective housing or cover 31 of a hydrogen recombining unit 30 for treating atmosphere containing hydrogen gas in a nuclear reactor containment vessel is provided with an intake port 33 at its lower portion and an exhaust port 35 at its upper side portion, respectively, and an air passage communicating thereto is defined therein. Further, a catalyst bed 37 comprising a plurality of plate type catalyzers 37a is disposed in the air passage close to the intake port 33 and air flow paths are defined between the plate type catalyzers 37 thereby allowing the air to flow therethrough. Further, an electric heater 39 is disposed extending through the plate type catalyzers 37 and its heating section is adjacent to the plate type catalyzers.

In the hydrogen recombining unit 30 with the construction described above, when hydrogen gas is generated resulting from an accident in the nuclear reactor containment vessel, a gaseous mixture containing hydrogen and oxygen, that is, air containing hydrogen gas flows through the intake port 33 into the gas passage in the cover 31 and on the catalytic surfaces of the plate type catalyzers 37a hydrogen and oxygen combine with the generation of heat. During an accident where there is the generation of hydrogen gas, the electric heater 39 is designed to be energized to generate electric resistance heat thereby heating adjacent catalysts, activating them and to promote recombination reaction. The catalysts adjacent to the area where recombination reactions are generated are heated by heat conduction of the heat generation and the recombination reaction is promoted there to thus activate the entire area of the plate type catalyzers 37a. This activation promoting phenomenon on the plate type catalyzers 37a is generated over the entire catalyst bed 37 and the recombination of hydrogen and oxygen is promoted thereby resulting in rapid treatment of the hydrogen. Air that has risen in temperature through heat generated in the recombination reaction flows farther on through the gas passage and is discharged from the exhaust port 35.

During abnormal conditions when hydrogen gas is generated, although the mixture containing water steam and poison material produced with the leaking out of the coolant at high pressure and high temperature flows in though the intake opening 33 and comes into contact with the catalyzer bed 37, the hydrogen gas treatment is rapidly performed with the aid of catalyst activation caused by the heating of the electric heater 39.

In addition, when the hydrogen concentration rises above four percent from the generation of large quantities of hydrogen gas, the electric heater 39 becomes a source of ignition and treats a large quantity of hydrogen gas by propagated combustion out of the device through the intake opening 33 or discharge opening 35.

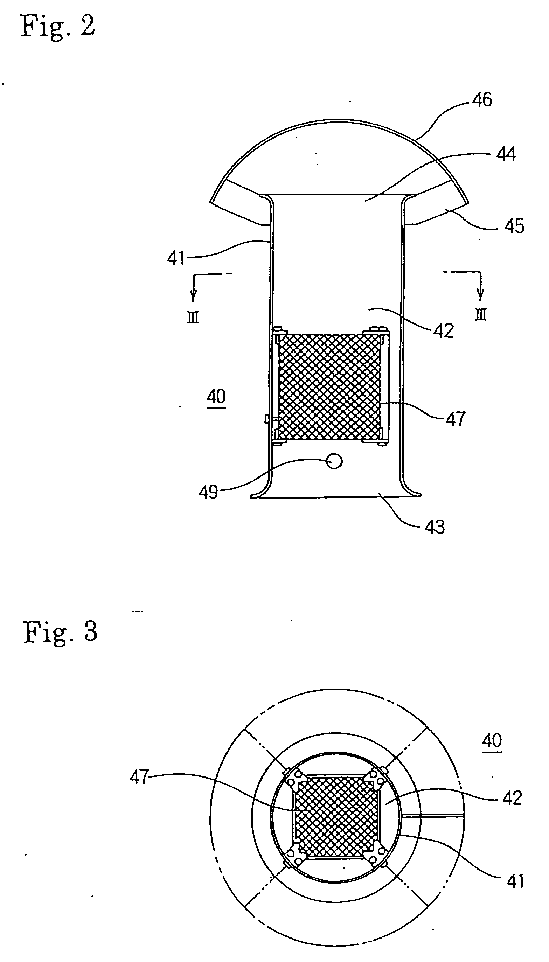

Next, a hydrogen recombining unit using a honey comb type catalyst will be described. Referring to Figs. 2 and 3, a housing or container 41 of a hydrogen recombining unit 40 for treating an air containing hydrogen gas in a nuclear reactor containment vessel is provided with an intake port 43 at its lower portion and a discharge port 44 at its upper portion and an air passage 42 communicating therewith is defined therein. The discharge port 44 of the container 41 is covered with a protective cover 46 apart therefrom, and an annular exhaust opening 45 is defined at the side thereof. Then, a catalyst bed 47 composed of honeycomb type catalysts is disposed in the air passage 42 inside of the container, and an electric heater 49 is disposed in the air passage 42 below the catalyst bed 47. A heating section of the electric heater 49 is close, but not adjacent to the catalyst bed 47.

In the hydrogen recombining unit 40 as described above, when hydrogen gas is generated resulting from an accident in the nuclear reactor containment vessel, a gas mixture containing hydrogen and oxygen, or hydrogen-gas-contained air flows into the air passage 42 in the container 41 through the intake port 43 and comes into contact with the catalyst bed 47. Thereafter, hydrogen and oxygen combine on surfaces of the catalysts thereby generating heat. During the accident when the hydrogen gas is generated, the electric heater 49 is supplied with electricity and produces electric resistance heat thereby heating and activating a lower portion of the catalyst close thereto. As a result, the recombination reaction is promoted. The catalyst adjacent to an area where the combination reaction is caused is heated through conduction of heat by exothermic reaction and the recombination reaction there is promoted. Thus, the catalyst of the catalyst layer 47 is heated successively and the phenomenon of promoting the activation is created over the entire catalyst layer 47 thereby promoting combination of hydrogen and oxygen. The air that has risen in temperature from the heat of the recombination reaction flows through the air passage 42 and is discharged out through the exhaust opening 45.

During abnormal conditions when hydrogen gas is generated, although the mixture containing water steam and poison material produced with the leaking out of the coolant at high pressure and high temperature flows in though the intake port 43 and comes into contact with the catalyzer layer 47, the hydrogen gas treatment is rapidly performed with the aid of catalyst activation caused by the heating of the electric heater 49.

In addition, when the hydrogen concentration rises above four percent from the generation of a large quantities of hydrogen gas, the electric heater 49 functions as an ignition source and treats a large quantities of hydrogen gas by the propagation of combustion wave.

### APPLICABILITY IN INDUSTRY

As described above, according to the invention, when hydrogen concentration in the air is low the hydrogen gas is treated by quick accomplishment of hydrogen recombination reaction with assistance of the catalyst activation which is promoted with the heater, while when the hydrogen concentration largely rises upon generation of a large quantity of the hydrogen gas, the heater serves as an ignition source and starts combustion reactions thereby rapidly treating the hydrogen.

## Claims

1. An apparatus for treating air containing hydrogen gas, characterized in that the apparatus comprises a housing provided with an intake port and an exhaust port and defining a gas passage therein, a catalyst bed disposed in said gas passage, and a heater disposed in or close to said catalyst bed.

2. The apparatus for treating air containing hydrogen gas as described in claim 1, characterized in that said catalyst bed is composed of plate type catalysts and an electric heater as said heater is disposed extending through the plate type catalysts.

3. The apparatus for treating air containing hydrogen gas as described in claim 1, characterized in that said catalyst bed is composed of honeycomb type catalysts and an electric heater as said heater is disposed close to the honeycomb catalysts on an upstream side of the honeycomb catalysts in said gas passage.
